(19) **Europäisches Patentamt / European Patent Office / Office européen des brevets**

(11) **EP 4 752 357 A1**

(12) # EUROPEAN PATENT APPLICATION

(43) Date of publication:
**03.06.2026  Bulletin 2026/23**

(21) Application number: **24216661.9**

(22) Date of filing: **29.11.2024**

(51) International Patent Classification (IPC):
**F03D 80/00** *(2016.01)*

(52) Cooperative Patent Classification (CPC):
**F03D 80/002; F05B 2230/80**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Qualitas Energy Service GmbH 10117 Berlin (DE)**

(72) Inventor: **Rabuske, Alexander 10117 Berlin (DE)**

(74) Representative: **Adares PartGmbB Tauentzienstraße 7 b/c 10789 Berlin (DE)**

(54) **METHOD FOR OPTIMIZING A SPATIAL LAYOUT OF A WIND POWER PLANT**

(57)     The invention relates to a method for optimizing a spatial layout of a wind power plant (1), the wind power plant (1) comprising at least one wind turbine (10) each wind turbine (10) having a location point ($X_i$), the method comprising the following steps:
• computing an optimized location point ($X_i$) for each wind turbine (10) representing an optimized spatial layout of the wind power plant (1) with the at least one wind turbine (10),
o by starting from an initial spatial layout and
o by determining (D) a master-sum,
the master-sum consisting of a plurality of sub-sums, the sub-sums comprising a set of distance measures (d), wherein each set of distance measures (d) is calculated between one individual location point ($X_i$) and a plurality of neighboring evidence points ($A_j$), wherein in a further method step shifting (S) the location points ($X_i$) and then determining (D) the master-sum again, the step of shifting (S) and determining (D) the master-sum is repeated such that a minimum of the master-sums is determined that represents the optimized spatial layout of the wind power plant (1).

Fig. 2

$$\sum_{i=1}^{n} \sum_{j \sim i} w_j \mathrm{d}(X_i, A_j) \to \min$$

EP 4 752 357 A1

**Description**

The invention refers to a method for optimizing the spatial layout of a wind power plant comprising at least one wind turbine.

Before such a wind power plant is erected in the field a significant number of considerations must be taken into account. These considerations can in general be described as restrictions. Such restrictions can be divided into several restriction-groups. Those are, in particular:

- physical influences of the wind turbine on the environment, as for example sound, shadow, wind turbulences, radar interference and seismologically relevant vibrations;
- administrative conditions, as for example nature reserves, distance requirements with respect to natural habitats as for example breeding sites of large birds, furthermore as land-use plans, military areas, airports and
- environmental conditions at location points of the wind turbines, in particular average wind speed, topography, land cover and geological ground conditions.

Taking all these restrictions into account, it is no trivial objective to find an optimized spatial layout for all wind turbines of a wind power plant. To solve this problem several methods are known from the prior art.

According to EP 3 841 301 A1 a method for determining a spatial wind turbine layout in a wind power plant is described comprising the steps of:

- generating a plurality of random layout candidates, each layout candidate fulfilling a set of basic requirements,
- performing a pre-screening process on each of the plurality of random layout candidates, the prescreening process including general optimization of the layout candidates,
- based on the pre-screening process, selecting a subset of layout candidates,
- performing detailed optimization on the layout candidates of the selected subset of layout candidates, including repositioning of a group of wind turbines until it reaches equilibrium, and
- based on the detailed optimization, selecting an optimized layout for the wind power plant among the optimized layout candidates of the subset of layout candidates.

However, EP 3 841 301 A1 remains mostly silent on particulars on how to perform the method step of a detailed optimization for the selected subset of spatial layout candidates.

Thus, it is an objective for the present invention to provide an improved method for optimizing a spatial layout of a wind power plant comprising at least one wind turbine each wind turbine having a location point.

This objective is solved by a method having the features according to claim 1.

This method comprises the following steps:

- computing an optimized location point for each wind turbine representing an optimized spatial layout of the wind power plant with the at least one wind turbine,

  ○ by starting from an initial spatial layout and
  ○ by determining a master-sum,

  the master-sum consisting of a plurality of sub-sums,
  the sub-sums comprising a set of distance measures,
  wherein each set of distance measures is calculated
  between one individual location point and
  a plurality of neighboring evidence points, wherein in a further method step shifting the location points and then determining the master-sum again, the step of shifting and determining the master-sum is repeated such that a minimum of the master-sums is determined that represents the optimized spatial layout of the wind power plant.

Optimizing could be replaced by the term improving or significantly improving with respect to this invention. This is, because optimizing must not be understood in the literal sense of finding an overall and universal optimum. The optimum found by this method depends largely on the number of restrictions taken into account and on the specific mathematical tools and the tools' settings to determine the optimum. For instance, taking the same set of restrictions into account but using a different mathematical tool to find the minimum of the master-sum can lead to a different spatial layout. Both layouts are optimizations in their specific regard. Thus, a plurality of optimized spatial layouts exists in parallel, each layout depending on the set of restrictions and/or the mathematical tools and their settings that have been used.

Each of the above-mentioned restrictions that must or shall be taken into account for optimizing a spatial layout of a wind power plant can be described by or mapped to a spatial distribution of respective evidence points. Some restrictions are not provided in a spatial distribution. Therefore, these restrictions must be mapped to a spatial distribution first before they can be processed. Consequently, for each and every location point of each individual wind turbine a set of distance measures can be calculated between this specific location point and the plurality of neighboring evidence points representing the chosen plurality of restrictions to be considered. This set of distance measures is summed to create a sub-sum for this specific location point of a wind turbine. All of those sub-sums are summed to calculate the master sum. Optimizing the spatial layout of the wind power plant is then represented by the mathematical task to find a minimum of all determined master sums. The specific location points of this minimum then represent the optimized spatial layout of the wind power plant.

The location points may be set in a two-dimensional x-y-notation representing the location of the wind turbine foundation or also in three dimensions if they refer for instance to the location of the rotor hub of the wind turbine. If location points with more than two dimension are used the distance measure must be adapted to the dimensionality of the spaces both for the location points and the evidence points.

Preferably, each distance measure referring to a defined evidence point is multiplied with a defined evidence point weight factor. By the introduction and setting of such a weight factor the influence of the specific evidence point representing a specific restriction can be increased or reduced. Several approaches can be used for the different values of the weight factors. They can be set between zero and one or between zero and 100 depending on practical considerations like the level of granularity that shall be realized.

Furthermore, using the method it is advantageous to define the plurality of neighboring evidence points for a location point by a spatial neighborhood relation. Thereby, in a flexible way the level can be set which evidence points shall still be considered being neighboring evidence points. Those spatial neighborhood relations can range from simple definitions stating that an evidence point is considered a neighboring evidence point if no further evidence point representing the same restriction lies between the respective location point and this evidence point. Thus, the spatial neighborhood relation is a topological factor and not a mathematical formula. Preferably, the spatial neighborhood relation is included into a so-called KD-tree. Such a KD-tree represents a set of rules defining if an evidence point is to be considered a neighbored evidence point or not. The use of KD-trees incurs further advantages in view of preferred embodiments on how to determine the minimum of the master-sum described in more detail the following.

Using mathematical notation, this preferred method for optimizing the spatial layout of a wind power plant comprising n wind turbines takes the form of:

$$\sum_{i=1}^{n} \sum_{j \sim i} w_j \mathrm{d}(X_i, A_j) \rightarrow \min$$

where $i, j$ and n are nonnegative integers with $i \leq n$, $w_j$ designates the weight factor for the specific evidence point $A_j$ and $\sim$ represents the spatial neighborhood relation between j and $i$.

A preferred embodiment of the method is further characterized in that the step of determining the minimum of the master sum comprises determining a global minimum of the master sum using a probabilistic algorithm. Such a probabilistic algorithm is preferably based on a Metropolis-Hastings algorithm. These algorithms are used for sampling from multi-dimensional distributions, especially when the number of dimensions is high. Furthermore, the Metropolis-Hastings algorithm is more preferably adapted as a Simulated Annealing algorithm. Compared to other approaches, using for example genetic algorithms, the results in optimizing the spatial layout of a wind power plant were significantly better.

Any of the method embodiments as described above is further characterized in that the initial spatial layout is a randomly generated layout. Alternatively, the initial spatial layout may be generated manually according to some general rules, or it may be the spatial layout of an already existing wind power plant that shall be assessed and/or repowered. Repowering describes a refurbishing procedure including replacements of existing wind turbines by more modern wind turbines. This may incur maintaining the location points of already existing wind turbines or an adjustment of existing location points by using one of the embodiments of the optimization method.

Any of the methods as previously defined methods is preferably further characterized in that the distance measure is selected from a group comprising spatial distance measures such as Euclidian distance, Manhattan distance or any other variant of the Minkowski distance. Depending on the scenario of restriction requirements other spatial distance measures, such as the Mahalanobis distance, are applicable. Furthermore, the spatial distance according to this invention is broadly defined to comprise inverted similarity measures. One example would be the Cosine Similarity.

Preferably, for any embodiment of the method as previously defined, the evidence points represent at least one parameter selected from a restriction-group consisting of:

- respecting physical influence of the wind turbine as in particular sound, shadow, wind turbulences, radar interference and seismologically relevant vibrations;

- respecting administrative conditions, as in particular nature reserves, distance requirements with respect to natural habitats, for example breeding sites of large birds, land-use plans, military areas and airports; and
- environmental conditions at the location points, in particular average wind speed, topography, land cover and geological soil conditions.

With respect to the physical effect of radar interference the probability to lose radar tracking for an object getting into a close spatial relationship with the wind turbines of the wind power plant shall be reduced below an acceptable threshold value. Seismologically relevant vibrations play a role in the surveillance of mining sites and/or scientific seismology measuring sites. Also, in this respect the reduction of the physical impact of the wind power plant below an agreed threshold level is the objective.

As already explained the described optimization method can be used for assessment and/or repowering of already existing wind power plants each comprising at least one existing wind turbine each existing wind turbine having an existing location point. Such a method comprises, the method steps of:

- using an embodiment of a method as previously described to generate an optimized spatial layout for all existing wind turbines of the existing wind power plant and
- comparing the optimized location points with the existing location points.

Wind turbines of existing wind power plants undergo a certain amount of wear in many respects. This requires constant monitoring and repairs, if necessary. Despite such repairs, structural parts like for example blades and bearings have a limited service-life. This leads to the already described repowering process for which the described methods may be applied as well.

Apart from that the assessment method can also be used to compare the quality level of the spatial layout between a number of existing wind power plants. The result may contribute to a better acquisition decision making, if one or a subset of existing wind parks shall be chosen from a larger number of existing wind parks

Furthermore, the described assessment method is preferably characterized in that all or a majority of the existing wind turbines are refurbished or replaced by more modern wind turbines, wherein specific restrictions caused by the more modern wind turbines are taken into account while performing the method.

Further features of the claimed optimization method will be described in the following with respect to one specific example. For this example, a Simulated Annealing algorithm has been used as follows.

The master-sum alias cost function E, in literature usually referred to as Energy function, for which a global minimum shall be found is defined as follows:

$$E(\chi, A, W, \mathrm{d_{norm}}, d_{\mathrm{allowed}}, C)$$

$$= \sum_{i=1}^{n} \sum_{j \sim i} \frac{w_j \mathrm{d}(X_i, A_j)}{d_{\mathrm{norm}}} + C \cdot \sum_{i=1}^{n} \sum_{k \sim i} \frac{d_{\mathrm{allowed}}}{w_j \mathrm{d}(X_i, X_k)} \mathbb{1}_{d_{\mathrm{allowed}} > \mathrm{d}(X_i, X_k)}$$

where, for $i, j, k, n \in \mathbb{N}$,

- $\chi = \{X_i\}$, is the current layout (i.e., the set of wind turbine locations).
- $A$ is the set of evidence points (soft taboos)
- $W = \{w_j\}$ are the weights. Here, the convention $0 \le w_j \le 1$ shall hold.
- $d_{\mathrm{norm}}$ is used for the normalization of the distances. In this context, the value will be set to a rotor diameter $D_R$ (e.g., 180 m).
- $d_{\mathrm{allowed}}$ is the minimum allowed distance. Here, the industry reference of 2.5 $D_R$ (=wind energy turbine rotor diameter) was used.
- C is a balancing hyperparameter. Here, a default value of 1 was used.

- $\mathbb{1}$ denotes the Characteristic Function, which, in this case, takes the value of 1 if the constraint is met, and 0 otherwise.

Following this definition, meliorative factors will receive a negative weight (i.e., decreasing the cost) and pejorative factors will receive a positive weight (i.e., increasing the cost). Using the Euclidean Distance ensures that d will only return positive values. Furthermore, KD-Trees were used to model the neighborhood relationship ~. This optimization problem can be reduced to a NP -hard problem, meaning that it is solvable by a Nondeterministic Turing Machine (in polynomial runtime), but, since the P vs. NP Problem famously remains unsolved, no assertion can be made about whether or not a solution can always be found in practice.

Simulated Annealing algorithm:

**Require:** Initial WTG Locations $\chi_0$, evidence points, grid points, initial temperature $T_0$, final temperature $T_{\text{final}}$, Number of iterations $n$, Normalization Distance $d_{\text{norm}}$, weights $W$, iteration interval $k$. Energy Function $E$

Initialize $\chi_i$ with random locations $X_i \subset G$

$T \leftarrow T_0$

$j \leftarrow 0$

$\chi_{\text{best}} \leftarrow \chi_0$

$$C_f \leftarrow \left( \left( \left( \frac{T_0}{T_{\text{final}}} \right)^{\frac{1}{k-1}} \right) \right)$$

**while** $j < n$ **or** $E(\chi_{\text{best}}, a_j, d_{\text{norm}}, C, d_{\text{allowed}}, w_j) > 0$ **do**

    **for** $i < k$ **do**

        $\chi' \leftarrow \text{perturb}(\chi_i)$

        $\Delta E \leftarrow E(\chi', A_j, d_{\text{norm}}, C, d_{\text{allowed}}, w_j) - E(\chi_i, A_j, d_{\text{norm}}, C, d_{\text{allowed}}, w_j)$

        **if** $\Delta_E < 0$ **then**

            $\chi_{i+1} \leftarrow \chi'$

            $\chi_{\text{best}} \leftarrow \chi_{i+1}$

        **else**

            $p \leftarrow \min(\exp(-\frac{\Delta E}{T}), 1)$

            $\chi_{i+1} \leftarrow \chi'$ with probability $p$ and $\chi_i$ with probability $1 - p$

        **end if**

        $T \leftarrow T \cdot C_f$

        $i \leftarrow i + 1$

    **end for**

    $j \leftarrow j + 1$

**end while**

**return** Energy for $\chi_{\text{best}}$

This algorithm requires as an input the set of potential locations, which, in the case of a simple scenario, may be considered to consist of points that are randomly distributed on a regular 2-dimensional grid in a Euclidean Coordinate System, e.g., created using the Universal Transfer Mercator Projection. The algorithm further requires the set of evidence points, i.e., the points that are subject to a factor with either meliorative or pejorative weight, depending on its semantic.

After initializing the output variables with zero, the algorithm will either loop as long as the provided number of iterations is not reached or stop as soon as the cost function E becomes negative. In each iteration, the randomly initialized solution configuration will be permutated, i.e., one point of the solution set is randomly shifted using the method described in algorithm.

The shifting is done via a translation of selected wind turbine locations using coordinate-wise noise values following a Normal Distribution N $(\mu,\sigma)$. Here, the framework considers them as hyperparameters and allows the user to define them manually. Nevertheless, default values of $\mu$ = 0 and $\sigma$ = *100* were implemented. The user may hand over different ones if desired. If one uses a UTM projection, one ends up with coordinate values in meters, i.e., using these default values would imply adding a Gaussian Noise with a Standard deviation of 100 meters.

One may note that it might be useful for specific scenarios to investigate different values for the Standard Deviation $\sigma$ as setting the Expectation $\mu \neq 0$ would result in the values being more likely shifted positively (i.e., towards Northeast on a UTM grid) or vice-versa, depending on the chosen value, due to the characteristics of the Normal Distribution.

The following permutation method was used:

Require: Location point set $\chi$ consisting of *n* points, grid point set G, Normal Distribution $\mathcal{N}$ with parameters $\mu$ and $\sigma$

$i$ <- Random Number between 1 and n $\chi \leftarrow \chi \setminus X_i$     $N \leftarrow \begin{pmatrix} x_N \\ y_N \\ \dots \end{pmatrix}$, $x_N \sim \mathcal{N}(\mu,\sigma), y_N \sim \mathcal{N}(\mu, \sigma)$, etc.

$X_i \leftarrow X_i + N$
$T <- \text{KDTree}(G)$
$j <- T.\text{query}(X_i, k = 1)$
$Y_i \leftarrow G_j$
$\chi \leftarrow \chi \cup \{Y_i\}$
Return: $\chi$

Then, the energy function is calculated for the new configuration and the result is compared to the previous one. It is worth to stress that the term "Energy", in this context, designates a cost rather than a potential, as it will be spent and not passed on. If the difference is negative, this means that the costs have decreased, and the configuration gets updated. Otherwise, it is handed over to the next configuration with probability p, or kept (complementary event, i.e., the probability is then 1 - *p*). The value of *p* is defined as an exponential probability distribution function (PDF) of the temperature value *T*.

At the end of every iteration, the temperature value *T* is multiplied with a scalar *Cf*, that is referred to as Cooling Factor. The formula from Potts et. al. (IIE transactions 23.4, pp. 346-354) is used to determine the optimal Cooling Ratio based on the initial temperature $T_0$, the recommended minimum final temperature (stopping criterion) $T_{final}$ = 0.1 and the interval *k*:

$$C_f(T_0, T_{\text{final}}, k) = \left( \frac{T_0}{T_{\text{final}}} \right)^{\frac{1}{k-1}}$$

Practical experiments have shown that it might be useful to restrict these values to a range between 0.8 and 0.9.

The reduction of the system's temperature *T* is a key concept, as it ensures that the algorithm will converge to a stable solution with respect to the optimization of the Energy Function. The following holds:

$$\lim_{T \searrow 0} \frac{-\Delta E}{T} = -\infty \Rightarrow \lim_{T \searrow 0} \exp\left( \frac{-\Delta E}{T} \right) = 0 \Rightarrow \min\left( \exp\left( \frac{-\Delta E}{T} \right), 1 \right)$$

will shift to 0

Thus, it exists a threshold after which $p = 0$ will always hold, which ensures that $\chi_{i+1}$ will always be set equal to $\chi_i$ to simulate a decrease in energy of the system the longer the iteration takes.

Furthermore,

$$\lim_{T \to \infty} \frac{-\Delta E}{T} = 0 \Rightarrow \lim_{T \to \infty} \exp\left( \frac{-\Delta E}{T} \right) = 1 \Rightarrow \min\left( \exp\left( \frac{-\Delta E}{T} \right), 1 \right)$$

will shift to 0

With a similar reasoning, it can be shown that

$$\lim_{T \nearrow 0} \frac{-\Delta E}{T} = \infty \Rightarrow \lim_{T \nearrow 0} \exp\left( \frac{-\Delta E}{T} \right) = \infty \Rightarrow \min\left( \exp\left( \frac{-\Delta E}{T} \right), 1 \right)$$

will shift to 1 and furthermore, that

$$\lim_{T \to -\infty} \frac{-\Delta E}{T} = 0 \Rightarrow \lim_{T \to -\infty} \exp\left( \frac{-\Delta E}{T} \right) = 1 \Rightarrow \min\left( \exp\left( \frac{-\Delta E}{T} \right), 1 \right)$$

will shift to 1

Therefore, the opposite will occur, meaning that $\chi_{i+1}$ will be set equal to the newly obtained configuration $\chi'$. If *ΔE* is negative, a quick deduction shows that the behavior would be inversed, thus misleading the algorithm, which, nevertheless, is prevented by the break point in the definition of the loop. Similarly, setting *Cf* to a negative value would result in undesirable periodic behavior changing of the probability function.

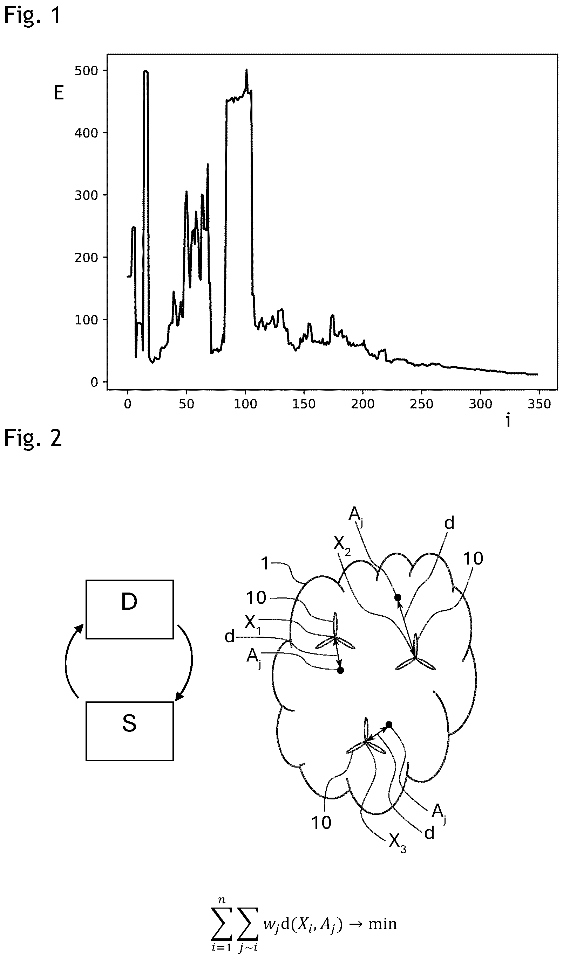

Figure 1 shows the result of executing the Simulated Annealing algorithm leading to the global minimum of the cost or Energy Function E after a more than 300 iteration rounds i.

Figure 2 depicts a schematic visualization of the optimizing method with its method steps. A wind power plant 1 is represented as a simple example by three wind turbines 10 each having a specific location point X; for the three wind turbines with i=1, i=2 and i=3. Inside an area showing a cloud-shaped boundary, the wind turbines 10 may be shifted, thus changing their location points $X_i$. If a new wind power plant 1 shall be erected, this cloud-shaped area is usually called the whitespace. For each defined location point X; inside the whitespace exist a number of j specific restriction points $A_j$ in the neighborhood of the location points $X_i$. The number of restriction points $A_j$ per wind turbine location point X; is usually higher than one. However, for the sake of clarity only one restriction point $A_j$ per location point $X_j$ is shown in this purely schematic figure. For each set of locations for the three wind turbines 10 inside the whitespace an individual set of neighboring restriction points $A_j$ exist. Therefore, for each set of locations X; a distance measure d can be determined between the respective location point Xi and the neighboring restriction point $A_j$. These three distance measures are summed to a master-sum according to the formula shown in this figure. When the method step of determining D the master-sum is performed, each distance measure d is weighed by a weight factor $w_j$. After the step D of determining the master-sum for a specific set of locations $X_i$, those locations points X; are shifted within the whitespace and then the step D of determining a new master-sum is performed again according to the formula. The step D of determining and the step S of shifting are repeated preferably in iterations in order to find an overall minimum of the master-sum. The set of location points X; related to the overall minimum of the determined master-sums represents the optimized spatial layout of the wind power plant 1 with its wind turbines 10 located at the respective set of location points $X_i$.

**Claims**

1. A method for optimizing a spatial layout of a wind power plant (1), the wind power plant (1) comprising at least one wind turbine (10) each wind turbine (10) having a location point ($X_i$), the method comprising the following steps:

   • computing an optimized location point ($X_i$) for each wind turbine (10) representing an optimized spatial layout of the wind power plant (1) with the at least one wind turbine (10),

      ∘ by starting from an initial spatial layout and
      ∘ by determining (D) a master-sum,

   the master-sum consisting of a plurality of sub-sums,
   the sub-sums comprising a set of distance measures (d),
   wherein each set of distance measures (d) is calculated
   between one individual location point ($X_i$) and
   a plurality of neighboring evidence points ($A_j$), wherein in a further method step shifting (S) the location points ($X_i$) and then determining (D) the master-sum again, the step of shifting (S) and determining (D) the master-sum is repeated, such that a minimum of the master-sums is determined that represents the optimized spatial layout of the wind power plant (1).

2. Method according to claim 1, **characterized in that**
   each distance measure (d) referring to a defined evidence point ($A_j$) is multiplied with a defined evidence point weight factor ($w_j$).

3. Method according to claim 1 or 2, **characterized in that**
   the plurality of neighboring evidence points ($A_j$) for a location point ($X_i$) is defined by a spatial neighborhood relation.

4. Method according to any of claims 1 to 3, **characterized in that**
   the step of determining the minimum of the master sum comprises determining a global minimum of the master sum using a probabilistic algorithm.

5. Method according to claim 4, **characterized in that**
   the probabilistic algorithm is based on a Metropolis-Hastings algorithm.

6. Method according to claim 5, **characterized in that**
   the Metropolis-Hastings algorithm is adapted as a simulated annealing algorithm.

7. Method according to one of the preceding claims, **characterized in that** the initial spatial layout is a randomly generated layout.

8. Method according to any of the preceding claims, wherein
the distance measure (d) is selected from a group comprising spatial distance measures such as Euclidian distance, Manhattan distance or any other variant of the Minkowski distance.

9. Method according to one of the preceding claims, **characterized in that** the evidence points ($A_j$) represent at least one parameter selected from a restriction-group consisting of:

   • respecting physical influence of the wind turbine (10) as in particular sound, shadow, wind turbulences, radar interference and seismologically relevant vibrations;
   • respecting administrative conditions, as in particular nature reserves, distance requirements with respect to natural habitats, land-use plans, military areas and airports; and
   • environmental conditions at the location points ($X_i$), in particular average wind speed, topography, land cover and geological soil conditions.

10. A method for an assessment and/or a repowering of an existing wind power plant (1') comprising at least one existing wind turbine (10') each existing wind turbine (10') having an existing location point ($X'_i$),
the method comprises the steps of:

   • using a method according to one of claims 1 to 9 to generate an optimized spatial layout for all existing wind turbines (10') of the existing wind power plant (1') and
   • comparing the optimized location points ($X_i$) with the existing location points ($X'_i$).

11. Method according to claim 10, **characterized in that** all or a majority of the existing wind turbines (10') are refurbished or replaced by more modern wind turbines, wherein specific restrictions caused by the more modern wind turbines are taken into account while performing the method.

Fig. 1

Fig. 2

$$\sum_{i=1}^{n}\sum_{j \sim i} w_j \mathrm{d}(X_i, A_j) \rightarrow \min$$

Europäisches
Patentamt

European
Patent Office

Office européen
des brevets

# EUROPEAN SEARCH REPORT

**Application Number**

EP 24 21 6661

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2009/295165 A1 (GIGUERE PHILIPPE [US] ET AL) 3 December 2009 (2009-12-03) * paragraphs [0001], [0006], [0024], [0026], [0036] * * figures 4,5 * | 1-11 | INV. F03D80/00 |
| A | FR 3 140 141 A1 (IFP ENERGIES NOW [FR]) 29 March 2024 (2024-03-29) * paragraphs [0023] - [0027] * | 1-11 | |
| A | CN 118 944 209 A (JIANGSU FANGTIAN POWER TECH CO) 12 November 2024 (2024-11-12) * the whole document * | 1-11 | |
| A | CN 116 167 189 A (CHINA THREE GORGES RENEWABLES GROUP CO LTD) 26 May 2023 (2023-05-26) * the whole document * | 1-11 | |
| A | CN 106 503 839 A (UNIV SHANGHAI ELECTRIC POWER) 15 March 2017 (2017-03-15) * the whole document * | 1-11 | TECHNICAL FIELDS SEARCHED (IPC) F03D |

The present search report has been drawn up for all claims

| Place of search | Date of completion of the search | Examiner |
|---|---|---|
| The Hague | 14 April 2025 | Pasquet, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 752 357 A1**

## ANNEX TO THE EUROPEAN SEARCH REPORT
## ON EUROPEAN PATENT APPLICATION NO.

EP 24 21 6661

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2025

| Patent document cited in search report | Publication date | Patent family member(s) | Publication date |
|---|---|---|---|
| US 2009295165 A1 | 03-12-2009 | CA 2667152 A1 | 30-11-2009 |
| | | CN 101592130 A | 02-12-2009 |
| | | EP 2128441 A2 | 02-12-2009 |
| | | US 2009295165 A1 | 03-12-2009 |
| FR 3140141 A1 | 29-03-2024 | FR 3140141 A1 | 29-03-2024 |
| | | WO 2024061627 A1 | 28-03-2024 |
| CN 118944209 A | 12-11-2024 | NONE | |
| CN 116167189 A | 26-05-2023 | NONE | |
| CN 106503839 A | 15-03-2017 | NONE | |

EPO FORM P0459

For more details about this annex : see Official Journal of the European Patent Office, No. 12/82

11

**REFERENCES CITED IN THE DESCRIPTION**

**Patent documents cited in the description**

- EP 3841301 A1